Europäisches Patentamt

European Patent Office

Office européen des brevets

(19)

(11) Veröffentlichungsnummer: **0 301 344**
**B1**

(12) # EUROPÄISCHE PATENTSCHRIFT

(45) Veröffentlichungstag der Patentschrift:
14.11.90

(21) Anmeldenummer: 88111500.0

(22) Anmeldetag: 18.07.88

(51) Int. Cl.⁵: **B01J 2/30**, C01C 1/16, C01B 9/08

(54) Verfahren zum Auftragen von Antibackmitteln auf Ammoniumbifluorid und/oder -fluorid-Salzgemische und -Salze.

(30) Priorität: 30.07.87 DE 3725285

(43) Veröffentlichungstag der Anmeldung:
01.02.89 Patentblatt 89/5

(45) Bekanntmachung des Hinweises auf die Patenterteilung:
14.11.90 Patentblatt 90/46

(84) Benannte Vertragsstaaten:
BE DE ES FR GB IT NL

(56) Entgegenhaltungen:
DE-B- 1 075 642
DE-B- 1 157 600
GB-A- 805 112

(73) Patentinhaber: BAYER AG,
D-5090 Leverkusen 1 Bayerwerk(DE)

(72) Erfinder: Geisler, Klaus, Dr., Nittumer Weg 24,
D-5060 Bergisch Gladbach 2(DE)
Erfinder: Jovcic, Dorde, Nagelsbaum 44,
D-5093 Burscheid(DE)
Erfinder: Krumbach, Bernd, Johann-Janssen-Strasse 3,
D-5090 Leverkusen(DE)
Erfinder: Heumüller, Heinz, Dr., An den Ruthen 2,
D-5000 Köln 80(DE)

**Beschreibung**

Die vorliegende Erfindung betrifft ein Verfahren, Antibackmittel auf unter Temperatur-, Druck- und Wasserdampfeinwirkung leicht zur Verbackung der Teilchen neigendes Ammoniumbifluorid und/oder -fluroid aufzutragen.

Ammoniumbifluorid/fluorid (technisch: Gemisch aus $NH_4HF_2$ und $NH_4F$) wird industriell durch Reaktion von gasförmigem Ammoniak und Fluorwasserstoff hergestellt. Aus der entstehenden Schmelze können mit entsprechenden Apparaturen durch Erstarrung Schuppen, Pastillen oder Prills hergestellt werden. Des weiteren ist bekannt, daß Ammoniumbifluorid/fluorid-Salzgemische aus wäßriger Lösung durch Kristallisation, Filtration und anschließende Trocknung gewonnen werden können (Ullmanns Encyclopädie der technischen Chemie, (4. Auflage), Band 11, Seite 621). Diesen Produkten haftet der Nachteil an, daß sie bei Lagerung durch Einwirkung von Druck - z.B. durch Übereinanderstapeln von Säcken auf Paletten -, Temperatur - z.B. durch längere Lagerung in Regionen mit erhöhter Jahresdurchschnittstemperatur - und/oder Feuchtigkeit zum Verbacken und/oder Verklumpen neigen. Dies kann im Extremfall dazu führen, daß das in Gebinden verpackte Produkt sich zu einem Agglomerat verhärtet, das unter Einsatz von mechanischer Beanspruchung wieder zu einem rieselfähigen, feinkörnigen Produkt gebrochen oder als gänzlich unbrauchbar verworfen werden muß.

Es wurde bereits versucht, diesen Problemkreis durch die Verwendung von Zuschlagstoffen zu lösen. So ist seit langem bekannt, daß anorganische Zuschlagstoffe wie Kieselgur [Winnacker-Küchler, "Chemische Technologie", (3. Auflage), Band 2, Seite 512], Tone [Ullmanns Encyclopädie der technischen Chemie, (4. Auflage), Band 23, Seite 322], Talkumarten [Kirk-Othmer, "Encyclopedia of Chemical Technology", (3. Auflage), Band 19, S. 608-614] und/oder Calciumcarbonat [Kirk-Othmer, "Encyclopedia of Chemical Technology", (3. Auflage) Band 14, S. 377] bei Ammoniumverbindungen als Antiback-und Fließmittel eingesetzt werden können. Diese müssen jedoch in relativ großen Menge (1 bis 5 Gew.-%) eingesetzt werden und haben den Nachteil, daß sie lediglich gegen Verklumpen durch Feuchtigkeit wirken. Die Einwirkung von Druck und Temperatur beeinflussen sie hingegen nicht. Weiterhin ist von Nachteil, daß diese Zuschlagstofe in den Prozessen, in denen aus wäßrigen Lösungen kristallisiert wird, als in Wasser praktisch unlösliche Verbindungen störende Einflüsse auf die jeweiligen Prozeßschritte ausüben, teilweise sogar mit den Salzen wie z.B. mit Ammoniumbifluorid reagieren. So wird z.B. im Falle der Zugabe von Kieselgur zu Ammoniumbifluorid-Lösungen giftiges $SiF_4$-Gas freigesetzt, im Falle der Zugabe von Ca-Verbindungen Fluorid gebunden und damit die Ausbeute an Ammoniumbifluorid verringert.

Weiterhin ist bekannt, daß sich Ammoniumverbindungen durch Zusatz von Farbstoffen vor Zusammenbacken und Verklumpen schützen lassen. In den GB-Patenten 625 077, 665 478 und 743 602 ist der Zusatz von Anilinrot zu Ammonium-Salzen beschrieben. Dieser Farbstoff hat jedoch den Nachteil, daß er nur bei tiefen Temperaturen wirksam ist, bei denen die Neigung des Verbackens ohnehin gering ausgeprägt ist. Darüber hinaus führt er zu einer intensiven Einfärbung des so behandelten Materials.

Aufgabe war es daher, ein Verfahren zur Verfügung zu stellen, das es gestattet, Ammoniumbifluorid und/oder -fluorid-Salzgemische und -Salze mit als Antibackmittel wirkenden Substanzen so zu modifizieren, daß das Salz oder Salzgemisch beim Lagern auch bei erhöhter Umgebungstemperatur, bei Druck- und/oder Feuchtigkeitseinwirkung nicht zu Agglomeraten verklumpt und - sei es als Kristall, Schuppe, Pastille oder Prill - frei fließ- und rieselfähig bleibt.

Gegenstand der vorliegenden Erfindung ist ein Verfahren zur Verhinderung der Verbackung von Feststoffteilchen unter Temperatur-, Druck- und/oder Feuchtigkeitseinwirkung durch Auftragen eines Antibackmittels, wobei als Antibackmittel primäre, sekunndäre oder tertiäre Amine mit 8 bis 25 Kohlenstoffatome aufweisenden Alkylresten eingesetzt werden und diese Antibackmittel als 5 bis 50 gew.-%ige Lösung in Fluorchlorkohlenwasserstoff in einer Menge von 0,01 bis 0,1 Gew.-%, bezogen auf Feststoff, auf Teilchen aus Ammoniumbifluorid und/oder -fluorid aufgesprüht werden.

Bevorzugt wird die Lösung durch möglichst feinteilige und homogene Verdüsung mit Tröpfchendurchmessern zwischen 1 und 100 µm, vorzugsweise zwischen 5 und 50 µm, auf den Feststoff aufgebracht.

In einer besonderen Verfahrensvariante wird die Lösung durch Verdüsung in den pneumatisch geförderten Feststoffstrom aufgebracht.

Überraschenderweise erwiesen sich die $C_8$-$C_{25}$-Alkylreste enthaltenden Amine, die aus den Reihen der primären, sekundären und tertiären Amine ausgewählt sind, als sehr wirksame Antibackmittel für Ammoniumbifluorid und/oder -fluorid. Vorzugsweise werden primäre Amine mit einer Kettenlänge von $C_{14}$-$C_{20}$ und/oder Gemische davon eingesetzt.

Um eine besonders gleichmäßige Verteilung des Antibackmittels auf den auszurüstenden Feststoff zu erreichen, hat es sich als vorteilhaft erwiesen, eine Verdünnung vor der Applikation vorzunehmen. Diese Verdünnung kann mit verschiedenen Lösungsmitteln erfolgen. Als besonders geeignet haben sich die inerten Fluorchlorkohlenwasserstoffe erwiesen, die eine gute Löslichkeit für die Amine aufweisen.

Die Antibackmittel liegen in der Lösung bevorzugt in einer Konzentration von 5 bis 50 Gew.-%, insbesondere von 10 bis 30 Gew.-% vor. Die Lösungen können bei unterschiedlichen Temperaturen hergestellt werden. Wird die Siedetemperatur des Lösungsmittels überschritten, so kann der Löseprozeß auch bei erhöhtem Druck vorgenommen werden. Als besonders vorteilhaft hat sich erwiesen - auch im Hinblick auf eine optimale Verteilung auf dem Salz nach der Verdüsung -, die Vermischung des Antibackmittels mit dem Lösungsmittel bei ca. 50 bis 60°C vorzunehmen.

Um eine optimale Wirkung des Antibackmittels zu erreichen, ist es vorteilhaft, eine feinteilige und gleichmäßige Verdüsung der 5 bis 50 Gew.-%igen, vorzugsweise 10 bis 30 Gew.-%igen Lösung mit z.B. 1,1,2,1,2,2-Trifluortrichlorethan als Lösungsmittel durchzuführen. Es hat sich als vorteilhaft erwiesen, die Zerstäubung mit einer Einstoffdüse in den pneumatisch geförderten Produktstrom von Kristallen, Prills, Schuppen oder Pastillen vorzunehmen. Um eine gleichmäßige Verteilung des Antibackmittels auf der Festkörperoberfläche zu erhalten, ist es weiterhin vorteilhaft, daß feinteilige Tröpfchen vorliegen, so daß einerseits ein schneller Niederschlag erfolgen kann, andererseits aber kein Austrag der Tröpfchen mit dem Förderlaufstrom aus der Mischungsstrecke auftritt. Im erfindungsgemäßen Verfahren erfolgt daher mit Vorteil die Verdüsung zu Tropfen von 1 bis 100 µm Durchmesser, vorzugsweise 5 bis 50 µm, die einerseits eine gleichmäßige Verteilung des Antibackmittels auf der $NH_4HF_2$ und/oder $NH_4F$-Oberfläche gewährleisten, andererseits aber nicht vom Luftstrom, der zur pneumatischen Förderung von Ammoniumbifluorid und/oder -fluorid-Kristallen, -Prills, -Pastillen oder -Schuppen notwendig ist, aus der Mischstrecke ausgetragen werden. Eine enge Größenverteilung der durch Versprühung erhaltenen Tröpfchen ist ebenfalls vorteilhaft.

Die im folgenden aufgeführten Beispiele geben das Wesen der Erfindung beispielhaft wieder, ohne sie jedoch auf diese zu beschränken.

Beispiel 1

Technische Ammoniumbifluoridschuppen, die in diesem Fall zu ca. 98 Gew.-% aus $NH_4HF_2$ und zu ca. 2 Gew.-% aus $NH_4F$ bestehen, werden mit einer 15 Gew.-%igen Lösung von Octadecylamin in 1,1,2,1,2,2-Trifluortrichlorethan so besprüht, daß 0,05 Gew.-% des Amins, bezogen auf das Salzgemisch, auf die Schuppen aufgebracht werden. Die Versprühung des Antibackmittels erfolgt mit einer Einstoffdüse, deren Bohrung so gewählt ist, daß bei einem Vordruck von 8 bar ein Sprühnebel mit einem mittleren Tropfendurchmesser von 20 µm erzeugt wird. Dieser Nebel wird auf die technischen Ammoniumbifluoridschuppen aufgebracht.

Die so ausgerüsteten Ammoniumbifluorid/fluorid-Schuppen werden über 28 Tage bei 40°C und bei einer relativen Luftfeuchte von 90 % in einem wasserdampfdurchlässigen Gebinde gelagert.

Nach Ende der Lagerung sind die Schuppen frei fließfähig.

Vergleichsbeispiel 1

Nicht behandelte Ammoniumbifluoridschuppen der analytischen Zusammensetzung wie in Beispiel 1 werden analog gelagert. Innerhalb von 4 Tagen sind die Schuppen zu einem festen Klumpen verbacken.

Beispiel 2

Ammoniumbifluorid der analytischen Zusammensetzung wie in Beispiel 1, jedoch in pastillierter Form, wird mit Oleylamin, das als 20 Gew.-%ige Lösung in 1,1,2,1,2,2-Trifluortrichlorethan vorliegt, in einer Konzentration von 0,04 Gew.-%, bezogen auf das Salz, versehen. Diese Pastillen werden über 24 Stunden bei 70°C in einer Klimakammer mit 40 % relativer Luftfeuchtigkeit gelagert, wobei die Ware in 25 kg-Säcken mit einer Stapelhöhe von 130 cm auf Paletten gestapelt ist. Es treten keine Verbackungen auf, das Material bleibt frei fließend.

Vergleichsbeispiel 2

Nicht besprühtes Salz, das unter gleichen Bedingungen wie in Beispiel 2 gelagert wird, verbackt in den 24 Stunden zu einem steinharten Agglomerat.

**Patentansprüche**

1. Verfahren zur Verhinderung der Verbackung von Feststoffteilchen unter Temperatur-, Druck- und/oder Feuchtigkeitseinwirkung durch Auftragen eines Antibackmittels, dadurch gekennzeichnet, daß als Antibackmittel primäre, sekundäre oder tertiäre Amine mit 8 bis 25 Kohlenstoffatome aufweisenden Alkylresten eingesetzt werden und diese Antibackmittel als 5 bis 50 gew.-%ige Lösung in Fluorchlorkohlenwasserstoff in einer Menge von 0,01 bis 0,1 Gew.-%, bezogen auf Feststoff, auf Teilchen aus Ammoniumbifluorid und/oder -fluorid aufgesprüht werden.

2. Verfahren gemäß Anspruch 1, dadurch gekennzeichnet, daß die Lösung durch möglichst feinteilige und homogene Verdüsung mit Tröpfchendurchmessern zwischen 1 und 100 µm, vorzugsweise zwischen 5 und 50 µm, auf den Feststoff aufgebracht wird.

3. Verfahren gemäß Anspruch 1 oder 2, dadurch gekennzeichnet, daß die Lösung durch Verdüsung in den pneumatisch geförderten Feststoffstrom aufgebracht wird.

**Claims**

1. A process for preventing particulate solids from caking under the effect of temperature, pressure and/or moisture by application of an anti-caking agent, characterized in that primary, secondary or tertiary amines containing $C_8$-$C_{25}$ alkyl groups are used as the anti-caking agents and these anti-caking agents are sprayed onto particles of ammonium difluoride and/or fluoride in the form of a 5 to 50% by weight solution in a fluorochlorocarbon in a quantity of 0.01 to 0.1% by weight, based on solids.

2. A process as claimed in claim 1, characterized in that the solution is applied to the solid by fine, homogeneous spraying with droplet diameters of 1 to 100 µm and preferably 5 to 50 µm.

3. A process as claimed in claim 1 or 2, characterized in that the solution is applied by spraying into the pneumatically transported stream of solids.

**Revendications**

1. Procédé pour empêcher l'agglutination de particules solides sous l'effet de la température, de la pression et/ou de l'humidité par application d'un agent anti-agglutinant, caractérisé en ce que l'on utilise comme agents anti-agglutinants des amines primaires, secondaires ou tertiaires à restes alkyles en $C_8$-$C_{25}$ et ces agents anti-agglutinants sont pulvérisés en solution à 5-50% en poids dans un hydrocarbure fluorochloré, en quantité de 0,01 à 0,1% en poids par rapport au solide, sur des particules de bifluorure et/ou de fluorure d'ammonium.

2. Procédé selon la revendication 1 caractérisé en ce que la solution est appliquée sur le solide par atomisation la plus homogène possible et en particules plus fines possible, à des diamètres de gouttelettes compris entre 1 et 100 µm, de préférence entre 5 et 50 µm.

3. Procédé selon la revendication, 1 ou 2 caractérisé en ce que la solution est appliquée par atomisation dans le courant de solide transporté dans un convoyeur pneumatique.